# EUROPÄISCHE PATENTSCHRIFT

(11) **EP 3 013 696 B1**
(45) Veröffentlichungstag und Bekanntmachung des Hinweises auf die Patenterteilung: **28.03.2018**
(21) Anmeldenummer: 14729015.9
(22) Anmeldetag: 11.06.2014
(51) Int. Cl.: B65B 35/36, B65B 35/44, B65B 35/46, B65B 35/54, B65B 65/00, B65G 47/28, B65B 21/06, B65G 47/08, B65G 47/84, B65B 27/04, B65B 35/16

(54) **VORRICHTUNG ZUM BILDEN VON VERPACKUNGSEINHEITEN**
DEVICE FOR FORMING PACKAGING UNITS
DISPOSITIF POUR FORMER UNITÉS D'EMBALLAGE

(30) Priorität: 27.06.2013 DE 102013106742
(43) Veröffentlichungstag der Anmeldung: 04.05.2016
(73) Patentinhaber: KHS GmbH, 44143 Dortmund (DE)
(72) Erfinder: CLAUSEN, Gunnar, 58730 Fröndenberg (DE); EHMER, Wilfried, 44227 Dortmund (DE); SCHOLZ, Ulrich, 59348 Lüdinghausen (DE); POHL, Ralph, 56598 Rheinbrohl (DE); BECKER, Jan, 55237 Flonheim (DE); LORENZ, Karl, 55585 Niederhausen (DE)
(86) Internationale Anmeldenummer: PCT/EP2014/062118
(87) Internationale Veröffentlichungsnummer: WO 2014/206733

(56) Entgegenhaltungen:
- EP-A1- 1 645 340
- EP-A1- 2 471 728
- WO-A1-95/28321
- WO-A1-96/27544
- WO-A1-99/14122
- WO-A2-2005/037685
- WO-A2-2008/022296
- DE-A1- 4 200 546
- DE-A1-102011 016 372
- US-A1- 2003 230 941
- US-A1- 2004 060 261
- US-B1- 6 386 353

## Beschreibung

Die Erfindung bezieht sich auf eine Vorrichtung zum Herstellen von Gebinden mit Behältern gemäß dem Patentanspruch 1, wobei ein Behälterstrom nach passieren einer Behälterbehandlungsanlage mittels Gassenteilung in mehrere einspurige Behälterströme umgewandelt wird, wobei die Behälter auf Gassenbändern aufgesetzt werden und mit mindestens einer Verdichtereinheit zum Verdichten einer vorbestimmten Anzahl an Behältern, so dass verdichtete oder formierte Behältergruppen bzw. Teilgebinde gebildet und nachfolgend jeweils zu einem späteren Gebinde zusammengefasst werden.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten bare auch zur Aufnahme von Lebensmitteln geeignet sind, aber auch bereits zu Gruppen (Mehrfachpack, Gebinde) zusammen gefasste Behälter. Behälterbehandlungsanlagen sind zum Beispiel Rinser, Füller, Verschließer aber auch Etikettiermaschinen. Diese können umlaufender Bauart oder linearer Bauart sein. Behälterbehandlungsanlagen umlaufender Bauart weisen einen Transportstern auf, an welchem die Behälter einer Kreisbahn folgend beispielsweise an Etikettiervorrichtungen vorbeigeführt werden. Vor dem Etikettieren können die Behälter nach Erkennungsmerkmalen ausgerichtet sein, so dass jedes Etikett gleich orientiert auf den Behälter aufbringbar ist.

Nachdem die Behälter in der Behälterbehandlungsanlage behandelt wurden, können diese einer Verpackungsmaschine zugeführt werden. Im Detail erfolgt die Herstellung der Gebinde z.B. in einer so genannten Verpackungsmaschine in der Weise, dass die Behälter auf einer Transportebene eines Transporteurs aufstehend und mit ihrer Behälterachse in vertikaler Richtung oder im Wesentlichen vertikaler Richtung orientiert in einem Massentransport bzw. in einem breiten Behälterstrom zugeführt werden, in dem die Behälter hinsichtlich markanter Behälter und/oder Ausstattungsmerkmale eine willkürliche Orientierung aufweisen können, da die vormalige Orientierung, also Ausrichtung verloren geht. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen bzw. stabilen Gebinde.

Möglich ist, die einzelnen Behälter des Gebindes miteinander zu verbinden, wobei z.B. eine Umschlingung z.B. mit einem Halteband oder einem anderen umfassenden Element denkbar ist. Ein solches umfassendes Element kann zum Beispiel auch ein Kartonzuschnitt und/oder ein Folienabschnitt sein, welcher um das betreffende Gebinde gelegt und entsprechend befestigt wird. In einem Schrumpftunnel können die zunächst anliegenden Folienenden haftend laminiert und anschließend die gesamte Folie geschrumpft werden. Denkbar ist auch, dass die Gebinde eine stabilisierende Unterlage bekommen, welche z.B. als Kartonzuschnitt (Tray) ausgeführt ist, auf welcher die Behälter aufstehen. Eine solche Unterlage ist insbesondere sinnvoll, wenn das spätere Gebinde z.B. aus mehreren Lagen von Teilgebinden gebildet werden soll. Dabei kann an der Unterlage angegriffen werden, so dass das eine Teilgebinde auf das andere gesetzt wird. Anschließend kann ein umfassendes Element vorgesehen werden, um die gestapelten Gebinde zu umfassen. Die Kartonzuschnitte werden als solche bevorzugt im entfalteten Zustand aus einem Magazin entnommen und können vor oder nach Zuführung zu dem späteren Gebinde gefalten werden, wobei eine entsprechend ausgeführte Faltstation Einsatz findet. Zur Bildung der Folienabschnitte wird eine Folienrolle zu einer Folienbahn entrollt, wobei die betrefflichen Folienabschnitte von der Folienbahn abgeschnitten werden. Hierzu ist eine Folienschneidstation sinnvoll einsetzbar, so dass der jeweilige Folienabschnitt die geforderten Dimensionen des jeweils zu verpackenden Gebindes hat. In einer weiteren Ausführung kann zwischen den Behältern der späteren Gebinde ein Abstandselement angeordnet werden, welches z.B. als Steg oder beispielsweise als Gefache ausgeführt ist. Dieses Gefache ist zumeist aus einem Karton gebildet, und wird vor dem Einsetzen in das spätere Gebinde aufgefacht, wobei ein Abstandselementeinsetzer, welcher beispielhaft als Stegeinsetzer oder Gefacheeinsetzer bezeichnet werden kann, Verwendung findet. Ist das Gebinde gebildet und hat gegebenenfalls den Schrumpftunnel verlassen, kann ein Packrouter zur Neuorientierung des Gebindes vorgesehen sein.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 A1) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird.

Aus der EP 2 500 296 A1 ist eine Vorrichtung und ein Verfahren zum Gruppieren von Stückgut entlang einer Förderstrecke. Mittels in den Förderstrom eingreifenden Einteilerelementen werden Lücken zwischen einander folgenden Stückgütern ausgebildet. Die Einteilerelemente sind in ihrer Vorschubbewegung und/oder -geschwindigkeit wegen der verwendeten getriebelosen Direktantriebe entlang der Bewegungsbahn individuell steuerbar. Die Einteilerelemente tauchen von unterhalb der Bewegungsbahn auf, teilen ein Anzahl an Behältern von dem Behälterstrom ab, halten den Behälterstrom zunächst auf, so dass zu den abgetrennten Behältern eine Lücke entsteht: Die Einteilerelemente beschleunigen dann und tauchen wieder unter das Niveau der Bewegungsbahn. Insofern kombiniert die EP 2 500 296 A1 eigentlich nur die vor deren Anmelde- bzw. Prioritätstag bekannte Einteiltechnik mit Einteilfingern, die auf umlaufenden Balken angeordnet sind, mit einem Antriebssystem, welches durch getriebelose Direktantriebe gebildet ist.

Die DE 10 2011 081 705 A1 beschäftigt sich ebenfalls mit einem Verfahren und einer Vorrichtung zum Gruppieren von Behältern. Dabei weist die Vorrichtung zwei Fördereinrichtungen mit unterschiedlichen Geschwindigkeiten auf. Die zweite Fördereinrichtung ist schneller, als die erste Fördereinrichtung. So werden die, die zweite Fördereinrichtung erreichenden Behälter schnellere bewegt als die Behälter auf der zweiten Fördereinrichtung. So entsteht zwischen den Behältern auf der zweiten Fördereinrichtung eine Lücke. Mittels einer Schiebe- oder Rückhalteeinrichtung werden die Behälter auf der zweiten Fördereinrichtung beschleunigt, verzögert und/oder gegeneinander verschoben, so dass die ursprüngliche Lücke verändert ist. Dabei wird z.B. der nacheilende Behälter auf den voreilenden Behälter geschoben. Die entsprechende Beschleunigung wird mittels linearmotorischer Antriebe erreicht, wobei die einzelnen Elemente der Schiebe- oder Rückhalteeinrichtung individuell steuerbar sind.

Schließlich ist aus der WO 2005/037685 A2 eine Vorrichtung zum Palettieren von Gegenständen, insbesondere Kunststoffflaschen, bekannt, die eine Puffereinrichtung und eine Förderstrecke enthält, an der ein Umsetzer zum Zusammenstellen einer Lage und ein Palettenbelader angeordnet sind. Um die Vorrichtung auf konstruktive Weise mit einer wirksamen Pufferung auszustatten, ist dabei vorgeschlagen, die Förderstrecke und den Puffer wahlweise durch den Umsetzer zu beschicken und wahlweise durch den Palettenbelader zu entladen.

Ein Nachteil ist darin zu sehen, dass die ausgerichtete Orientierung der Behälter in den der Behälterbehandlungsanlage folgenden Schritten verloren geht, so dass eine erneute Ausrichtung durchführbar ist, wenn die Behälter alle gleichorientiert in dem Gebinde angeordnet sein sollen. Zudem können an der Behälterbehandlungsanlage auch Inspektionsvorrichtungen angeordnet sein, wodurch die Behälterbehandlungsanlage mehrere Funktionen aufweisen kann. Dies ist grundsätzlich vorteilhaft. Jedoch rotiert die Behälterbehandlungsanlage mit einer konstanten Geschwindigkeit, so dass die nachfolgenden Schritte an die Geschwindigkeit der Behälterbehandlungsanlage angepasst werden müssten. Denn erfordert ein folgender Schritt einen Geschwindigkeitsabbau, kann die Behälterbehandlungsanlage selbstverständlich nicht mit der eigentlich möglichen Rotationsgeschwindigkeit betrieben werden, wodurch der eigentlich erreichbare Ausstoß nicht erreichbar ist, da die Behälterbehandlungsanlage zu langsam für den möglichen Behälterausstoß betreiben wird. Möglich ist die Behälterbehandlungsanlage mit der Rotationsgeschwindigkeit unverändert zu belassen, wobei dann aber eine Puffervorrichtung vorgesehen werden sollte, welche einen Ausgleich zu nachfolgenden Vorrichtungen schafft,

Aufgabe der Erfindung ist es, eine Vorrichtung der eingangs genannten Art anzugeben, bei welcher die der Behälterbehandlungsanlage nachfolgenden Schritte von der konstanten Rotationsgeschwindigkeit der Behälterbehandlungsanlage entkoppelt werden können.

Die Lösung dieser Aufgabe gelingt mit einer Vorrichtung mit den Merkmalen des Patentanspruchs 1.

Weiterbildungen, Vorteile und Anwendungsmöglichkeiten der Erfindung ergeben sich auch aus der nachfolgenden Beschreibung von Ausführungsbeispielen. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Erfindungsgemäß ist vorgesehen, dass der Behälterbehandlungsanlage ein elektromagnetischer Lineartransporteur nachgeschaltet ist, an welchem Bewegungselemente umlaufend angeordnet sind, wobei dem elektromagnetischen Lineartransporteur zumindest ein Ausleitstern nachgeschaltet ist, an den die Behälter übergeben werden und von hier auf die Gassenbänder aufgesetzt werden.

So ist sichergestellt, dass die der Behälterbehandlungsanlage nachfolgenden Komponenten der Verpackungsmaschine in ihrer jeweiligen Geschwindigkeit von der Geschwindigkeit der Behälterbehandlungsanlage entkoppelt ist. Denn die Geschwindigkeit der Bewegungselemente entlang des elektromagnetischen Lineartransporteurs ist individuell steuerbar, wobei die Transportgeschwindigkeit an jedem Punkt des Lineartransporteurs unterschiedlich sein kann, wie unten erläutert wird. So kann der Lineartransporteur quasi als Puffer dienen, und einem Ausgleich schaffen. Die Behälterbehandlungsanlage wird im Regelfall eine Vorrichtung zum Dekorieren der Behälter sein, wie eine oder mehrere Etikettiervorrichtungen oder Bedruckungsmaschinen, kann aber ebenso eine Verschließmaschine oder eine Füll- und/oder Behälterformvorrichtung sein.

Der Lineartransporteur weist erfindungsgemäß eine geschlossene Bewegungsbahn auf, an welcher die einzelnen Bewegungselemente angeordnet sind, welche umlaufen. Die Bewegungselemente sind grundsätzlich individuell ansteuerbar, so dass jedes Bewegungselement eine eigene Geschwindigkeit bzw. Geschwindigkeitsprofil haben kann. An einem Hintrum der Bewegungsbahn, ist die Geschwindigkeit bzw. die Geschwindigkeitsprofile der dort befindlichen Bewegungselemente zweckmäßig gleich zueinander, wenn auch alle Bewegungselemente entlang des Hintrums an dem jeweils gleichen Ort des Hintrums die gleiche Geschwindigkeit haben. Entlang des Rücktrums können die Bewegungselemente wiederum eine andere Geschwindigkeit haben. Dies ist vorteilhaft, da so eine sehr geringe Anzahl an Bewegungselementen vorgesehen werden kann, da die sich entlang des Hintrums bewegenden Bewegungselemente die sich entlang des Rücktrums bewegenden Bewegungselemente voneinander entfernen oder verdichten werden können, insbesondere um ausreichend Zeit für den Geschwindigkeitsabbau von der Behandlungsmaschine zum Ausleitstern bereitstellen zu können.

Die Bewegungsbahn kann selbstverständlich eine Schleuse zum Ausschleusen von nicht benötigter oder zu überprüfenden Bewegungselemente aufweisen bzw. zur Einschleusung von Bewegungselementen. Die jeweiligen Bewegungselemente können z.B. so angesteuert werden, dass diese bei einer Übernahme von dem Transportstern der Behälterbehandlungsanlage mit deren Geschwindigkeit bewegt werden und nachfolgend einen Geschwindigkeitsabbau zu dem zumindest einen Ausleistern bewirken. Dabei kann der Ausleitstern mit einer an das folgende Gassenband angepassten Geschwindigkeit rotieren.

Der Lineartransporteur ist in der Art einer elektromagnetischen Bahn ausgeführt, wobei die Bewegungselemente in der Art von Schlitten oder Laufwagen, so genannten "Mover", getriebelos an dieser direkt ansteuerbar umlaufen, wobei die jeweils gewünschte Geschwindigkeit des jeweiligen Bewegungselementes auf mindestens einer Teilstrecke des Umlaufes individuell ansteuerbar ist. Dazu ist eine Schnittstelle der Bewegungsbahn mit einer Steuereinheit verbindbar. Der Lineartransporteur kann demnach ein elektromagnetischer Direktantrieb sein.

Zwischen dem Hintrum und dem Rücktrum sind erfindungsgemäß Kurvenbereiche ausgeführt. Die Bewegungsbahn ist in ihrem Verlauf individuell erstellbar, was bedeutet, dass die Bewegungsbahn nicht nur in ihrem Verlauf an die Erfordernisse der Vorrichtung zum Erstellen der Gebinde angepasst werden kann.

Der Lineartransporteur ist seiner Dimension, also in der Länge und in der Breite an die jeweiligen Erfordernisse anpassbar gestaltbar.

Zielführend ist es, wenn an den Bewegungselementen Haltevorrichtungen für die Behälter angeordnet sind. Die Haltevorrichtungen können so ausgeführt sein, dass die Behälter um ihre Hochachse rotiert werden können, so dass die Behälter zum Beispiel inspiziert werden können. Mittels der Haltevorrichtungen, welche auch als aktive Greifer bezeichnet werden können, können die jeweiligen Behälter aber auch in eine ausgerichtete Position verbracht werden, was auch anhand der Inspektionsvorrichtungen überprüft werden kann.

So kann entlang dem Lineartransporteur beispielsweise eine oder mehrere Inspektionsstationen oder -vorrichtungen angeordnet werden, mit denen beispielsweise das aufgebrachte Etikett kontrollierbar ist. Erkennt die optionale Inspektionsvorrichtung fehlerhafte Behälter, kann der betreffende Behälter an einer Auswurfstation ausgeworfen werden, so dass dieser nicht in die Verpackungsmaschine gelangt.

In günstiger Ausgestaltung ist vorgesehen, dass die optionale(n) Inspektionsvorrichtung(en) an dem Hintrum des Lineartransporteurs angeordnet sind. Weiterhin ist es vorteilhaft vor den regulären Ausleitsternen für Gutbehälter, eine Ausleitung von Schlechtbehältern vorzusehen.

Zielführend ist, wenn mehrere Ausleitsterne vorgesehen werden, an welche die Behälter von dem Lineartransporteur übergeben werden. In bevorzugter Ausgestaltung sind drei Ausleitsterne vorgesehen.

In günstiger Ausgestaltung sind die drei Ausleitsterne bezogen auf die Bewegungsrichtung der Bewegungselemente hintereinander angeordnet, und bevorzugt an dem Rücktrum des Lineartransporteurs angeordnet. Jeder der Ausleitsterne übergibt die Behälter an ein separat zugeordnetes Gassenband. So ist bei einer bevorzugten Verwendung dreier Ausleitsterne ein Behälterstrom in drei Gassen erreichbar.

Sind mehrere, z.B. drei Ausleitsterne vorgesehen, sind diese mit einer durch die Rotationsachse der Ausleitsterne gedachten Geraden parallel zu einer Mittellängsachse des Lineartransporteurs, also auch parallel zu dem Rücktrum desselben. Dabei kann die Mittellängsachse in einer Aufsicht gesehen horizontal oder geneigt verlaufen.

Ist der Lineartransporteur mit seiner Mittellängsachse horizontal verlaufend (in der Aufsicht gesehen) angeordnet, weisen die Gassenbänder in einer Ausführungsmöglichkeit unterschiedliche Längen auf. So weist das Gassenband, welches dem in Bewegungsrichtung der Bewegungselemente gesehenen ersten Ausleistern zugeordnet ist, eine kürzere Ausgestaltung auf, als das Gassenband, welches dem in Bewegungsrichtung der Bewegungselemente gesehen letzten Ausleitstern zugeordnet ist. Das mittige Gassenband weist also eine dazwischen liegende Länge auf. Alle Gassenbänder verlaufen aber parallel zueinander und enden an der Verdichtereinheit. Bei dieser ersten Ausgestaltung können die Gassenbänder winklig auf die Verdichtereinheit zu laufen, wobei entlang der Gassenbänder optional Weichen und/oder Teiler vorgesehen sein können. Dabei können die Gassenbänder in einer ersten Ausgestaltung in einem spitzen Winkel auf die Verdichtereinheit zu laufen, welcher größer als NULL° oder kleiner als 90° ist. Möglich ist aber auch eine Ausgestaltung, bei welcher die Gassenbänder in einem senkrechten Winkel von 90° auf die Verdichtereinheit zu laufen. Bei dieser Variante weisen alle Gassenbänder die gleiche Erstreckungslänge auf. Möglich ist noch an den Gassenbändern eine Übergabevorrichtung zu installieren, welche die Behälter von dem, dem Ausleitstern zugeordneten Gassenband auf ein parallel dazu verlaufendes Übernahmeband übergibt. Das Übernahmeband überlappt mit dem Ausleitsterngassenband und endet an einem optionalen Querverdichtungselement, welches der Verdichtereinheit vorgeschaltet sein kann. Eine Querverdichtung kann mittels kurvenfähiger Bänder und/oder querverstellbaren Bändern erreicht werden.

Wie bereits gesagt, kann die Mittellängsachse des Lineartransporteurs in der Aufsicht gesehen aber auch geneigt angeordnet sein. Bei dieser Ausgestaltung ist die gedachte Gerade durch die Rotationsachsen der Ausleitsterne parallel zur Mittellängsachse, so dass die Ausleitsterne in Aufsicht gesehen quasi versetzt zueinander angeordnet sind. Dabei weisen die Gassenbänder wiederum jeweils eine unterschiedliche Länge auf, wie dies zu der ersten möglichen Ausgestaltung erwähnt wurde. Jedoch laufen die Gassenbänder in Aufsicht gesehen horizontal (also in einem Winkel von 0° oder 180°) auf die Verdichtereinheit zu. Insofern kann bei dieser Ausgestaltung auch von einer fluchtenden Ableitstrecke gesprochen werden.

Der, also die Ausleitsterne rotieren mit einer konstanten Geschwindigkeit, wobei die nachfolgenden Gassenbänder in ihrer Geschwindigkeit variabel sein können. Von daher ist es zielführend, wenn auch die Gassenbänder mittels eines Servomotors angetrieben sind, oder diese sogar als elektromagnetischer Lineartransporteur ausgeführt sind, so dass die Behälter oder Teilgruppen von Behältern durch ebenso separat und individuell ansteuerbar Bewegungselemente bzw. verbundene geeignete Träger- oder Haltevorrichtungen gefördert werden können.

Erfindungsgemäß sind auch die Ausleitsterne als elektromagnetischer Direktantrieb ausgeführt, wobei die Erkenntnisse des oben beschriebenen elektromagnetischen Lineartransporteur übertragbar sind. Insofern können auch die Ausleitsterne umlaufende Bewegungselemente aufweisen, welche individuell ansteuerbar sind.

Hierdurch kann die Strecke zum Geschwindigkeitsabbaut verlängert werden, d.h. es werden sanftere Übergänge geschaffen und es werden zusätzliche Freiheitsgrade erzeugt, gezielt die gewünschten individuellen oder gemeinsamen Lücken, z.B. vor der Verdichterstrecke zu erzeugen, wobei nicht oder nur noch minimal drängend oder schiebend auf die Behälter eingewirkt werden muss.

In einer verbesserten Variante ist am Einlauf der Gassenbänder ein zusätzliches Transportmittel vorgesehen, mittels welchem ein einzelner Behälter oder eine Gruppe von in Reihe stehender Behälter gezielt beschleunigt werden kann, z.B. indem Behälter am Kopf oder im Bauchbereich erfasst werden. Ein Behälter oder eine Gruppe von Behältern wird hierdurch relativ zu und unabhängig von dem jeweiligen Gassenband beschleunigt (positiv oder negativ). Derartige Transportmittel können bspw. beidseitig angeordnete und endlos umlaufende Klemmbänder sein, Schneckenförderer mit zugehörigem Leitscheine, zwei parallele Schneckenförderer oder dergleichen mehr. Diese zusätzlichen Transportmittel dienen im Zusammenwirken mit den Gassenbändern insbesondere dazu, alle Behälter des zu bildenden Gebindes frühst möglich und so vorteilhaft wie möglich, als abgegrenzte Gruppe auf den parallelen Gassenbändern zu positionieren, um nachfolgende weitestgehend die störanfälligen drängende oder verschiebende Prozessschritte zu vermeiden.

Die Erfindung wird im Folgenden anhand der in den Figuren gezeigten Ausführungsbeispiele näher erläutert. Es zeigen:
- Fig. 1: eine Vorrichtung zum Bilden von Gebinden mit Behältern in einer ersten Ausgestaltung prinzipiell in Aufsicht,
- Fig. 2: eine Vorrichtung zum Bilden von Gebinden mit Behältern in einer zweiten Ausgestaltung prinzipiell in Aufsicht, und
- Fig. 3: eine Vorrichtung zum Bilden von Gebinden mit Behältern in einer dritten Ausgestaltung prinzipiell in Aufsicht.
- Fig. 4: eine zu den Figuren 1 bis 3 analoge Vorrichtung mit Schneckenförderer im Übergangsbereich vom Ausleitstern und Gassenbändern.

In den unterschiedlichen Figuren sind gleiche Teile stets mit denselben Bezugszeichen versehen, weswegen diese in der Regel auch nur einmal beschrieben werden.

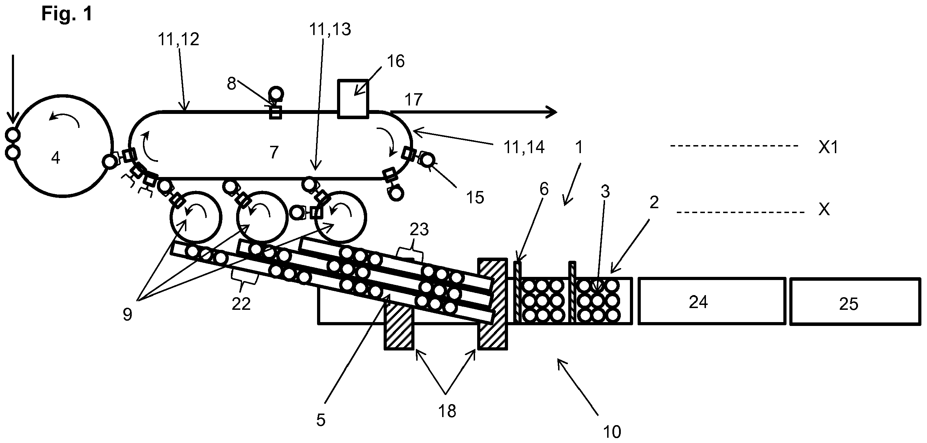

Figur 1 zeigt eine Vorrichtung 1 zum Herstellen von Gebinden 2 mit Behältern 3, wobei ein Behälterstrom nach passieren einer Behälterbehandlungsanlage 4 mittels Gassenteilung in mehrere einspurige Behälterströme umgewandelt wird, wobei die Behälter 3 auf Gassenbändern 5 aufgesetzt werden und mit mindestens einer Verdichtereinheit zum Verdichten einer vorbestimmten Anzahl an Behältern 3, so dass verdichtete oder formierte Behältergruppen bzw. Teilgebinde gebildet und nachfolgend jeweils zu einem späteren Gebinde 2 zusammengefasst werden. Der Behälterbehandlungsanlage 4 ist ein elektromagnetischer Lineartransporteur 7 nachgeschaltet (geschlossenes Oval) an welchem Bewegungselemente 8 umlaufend angeordnet sind, wobei dem elektromagnetischen Lineartransporteur 7 zumindest ein Ausleitstern 9 mit eigenständigen Greif- oder Haltemitteln nachgeschaltet ist, an den die Behälter 3 übergeben werden und von hier auf zumindest ein Gassenband 5 aufgesetzt werden.

In allen Ausführungsbeispielen sind drei Ausleitsterne 9 vorgesehen, so dass auch drei Gassenbänder 5 vorgesehen sind.

Auf den Lineartransporteur 7 wird später eingegangen.

Die Gassenbänder 5 übernehmen Behälter 2 von dem jeweiligen Ausleitstern 9 führen in Richtung zu einer Verdichtereinheit 10, welche bekannt ist. Der Verdichtereinheit 10 folgen weitere Komponenten einer Verpackungsmaschine, wie z.B. ein Folieneinschlagmodul 24 und darauf folgend ein Schrumpftunnel 25.

Der Lineartransporteur 7 weist eine geschlossene Bewegungsbahn 11 auf, an welcher die einzelnen Bewegungselemente 8 angeordnet sind, welche umlaufen.

Der Lineartransporteur 7 ist in der Art einer elektromagnetischen Bahn ausgeführt, wobei die Bewegungselemente 8 getriebelos an dieser direkt ansteuerbar umlaufen, wobei die jeweils gewünschte Geschwindigkeit des jeweiligen Bewegungselementes 8 individuell ansteuerbar ist. Dazu ist eine Schnittstelle der Bewegungsbahn 11 mit einer Steuereinheit verbindbar. Der Lineartransporteur 7 kann demnach ein elektromagnetischer Direktantrieb sein.

Die Bewegungsbahn 11 weist eine Hintrum 12 und einen Rücktrum 13 auf. Zwischen dem Hintrum 12 und dem Rücktrum 13 sind bevorzugt Kurvenbereiche 14 ausgeführt. Die Bewegungsbahn 11 ist in ihrem Verlauf individuell erstellbar, was bedeutet, dass die Bewegungsbahn 11 nicht nur in ihrem Verlauf an die Erfordernisse der Vorrichtung zum Erstellen der Gebinde angepasst werden kann.

An den Bewegungselementen 8 sind nicht Haltevorrichtungen 15 für die Behälter 3 angeordnet.

Entlang dem Lineartransporteur 7 ist beispielsweise eine Inspektionsvorrichtung 16 angeordnet, mit welcher beispielsweise ein aufgebrachtes Etikett kontrollierbar ist. Erkennt die optionale Inspektionsvorrichtung 16 fehlerhafte Behälter, kann der betreffende Behälter an einer Auswurfstation 17 ausgeworfen werden, so dass dieser nicht in die Verpackungsmaschine gelangt.

Es können auch mehrere Inspektionsvorrichtungen vorgesehen sein. In günstiger Ausgestaltung ist vorgesehen, dass die optionale(n) Inspektionsvorrichtung(en) 16 an dem Hintrum 12 des Lineartransporteurs 7 angeordnet sind.

Wie erkennbar sind die drei Ausleitsterne 9 bezogen auf die Bewegungsrichtung der Bewegungselemente 8 hintereinander angeordnet, und bevorzugt an dem Rücktrum 13 des Lineartransporteurs 7 angeordnet. Jeder der Ausleitsterne 9 übergibt die Behälter 2 an ein separat zugeordnetes Gassenband 5. So ist bei einer bevorzugten Verwendung dreier Ausleitsterne 9 ein Behälterstrom in drei Gassen erreichbar.

Sind mehrere, z.B. drei Ausleitsterne 9 vorgesehen, sind diese mit einer durch die Rotationsachse der Ausleitsterne 9 gedachten Geraden X parallel zu einer Mittellängsachse X1 des Lineartransporteurs 7, also auch parallel zu dem Rücktrum 13 desselben. Dabei kann die Mittellängsachse X1 in einer Aufsicht gesehen horizontal oder geneigt zu den oben und unten angeordneten Blatträndern verlaufen.

Bei dem Ausführungsbeispiel zu Figur 1 ist der Lineartransporteur 7 mit seiner Mittellängsachse X1 horizontal verlaufend (in der Aufsicht gesehen) angeordnet. Die Gassenbänder 5 weisen dabei unterschiedliche Längen auf. So weist das Gassenband 5, welches dem in Bewegungsrichtung der Bewegungselemente 8 gesehenen ersten Ausleitstern 9 zugeordnet ist, eine kürzere Ausgestaltung auf, als das Gassenband 5, welches dem in Bewegungsrichtung der Bewegungselemente 8 gesehen letzten Ausleitstern 9 zugeordnet ist. Das mittige Gassenband 5 weist also eine dazwischen liegende Länge auf. Alle Gassenbänder 5 verlaufen aber parallel zueinander und enden an der Verdichtereinheit 10. Bei dieser ersten Ausgestaltung laufen die Gassenbänder 5 winklig auf die Verdichtereinheit 10 zu, wobei entlang der Gassenbänder 5 optional Weichen 18 und/oder Teiler 18 vorgesehen sein können. Dabei laufen die Gassenbänder 5 bei der in Figur 1 gezeigten Ausgestaltung in einem spitzen Winkel auf die Verdichtereinheit 10 zu, welcher größer als NULL° oder kleiner als 90° ist. Bei der beispielhaft gezeigten Weiche 18 handelt es sich um ein seitlich angeordnetes Band, dessen Profilierung die einlaufenden Behälter gruppenweise quer zur Transportrichtung verschiebt, wie in der FR 2 738 231 A beschrieben. Dies ist aber in keiner Weise einschränkend, je nach Transportaufgabe oder Platzverhältnissen können sonstige bekannte Weichen- und Aufteilsysteme zum Einsatz kommen.

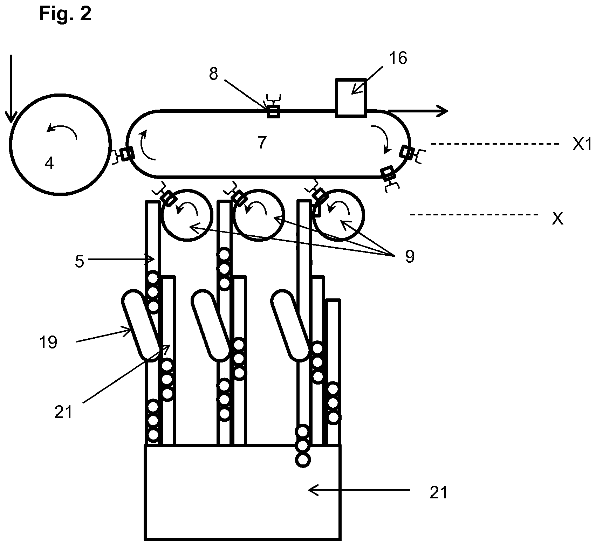

Möglich ist aber auch eine Ausgestaltung, bei welcher die Gassenbänder 5 in einem senkrechten Winkel von 90° auf die Verdichtereinheit 10 zu laufen. Bei dieser Variante, welche in Figur 2 gezeigt ist, weisen alle Gassenbänder 5 die gleiche Erstreckungslänge auf. Wie in Figur 2 erkennbar ist an den Gassenbändern 5 jeweils eine Übergabevorrichtung 19 installiert, welche die Behälter 2 von dem, dem Ausleitstern 9 zugeordneten Gassenband 5 auf ein parallel dazu verlaufendes Übernahmeband 20 übergibt. Das Übernahmeband 20 überlappt mit dem Ausleitsterngassenband 5 und endet an einem optionalen Querverdichtungselement 21, welches der Verdichtereinheit 10 vorgeschaltet sein kann. Eine Querverdichtung kann mittels kurvenfähiger Bänder und/oder querverstellbaren Bändern erreicht werden.

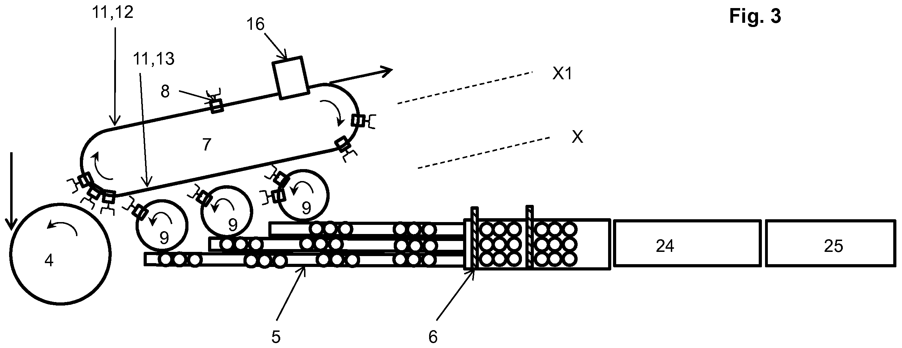

Wie bereits gesagt, kann die Mittellängsachse X1 des Lineartransporteurs in der Aufsicht gesehen aber auch geneigt angeordnet sein. Bei dieser Ausgestaltung ist die gedachte Gerade X durch die Rotationsachsen der Ausleitsterne 9 parallel zur Mittellängsachse, so dass die Ausleitsterne 9 in Aufsicht gesehen quasi versetzt zueinander angeordnet sind, wie der Figur 3 entnehmbar ist. Dabei weisen die Gassenbänder 5 wiederum jeweils eine unterschiedliche Länge auf, wie dies zu der ersten möglichen Ausgestaltung nach Figur 1 erwähnt wurde. Jedoch laufen die Gassenbänder 5 in Aufsicht gesehen horizontal (also in einem Winkel von 0° oder 180°) auf die Verdichtereinheit 10 zu. Insofern kann bei dieser Ausgestaltung nach Figur 3 auch von einer fluchtenden Ableitstrecke gesprochen werden.

Wie in den Figuren 1 bis 3 zu sehen, sind auf jedem Gassenband 5 Behälterreihen mit jeweils drei aufeinander folgenden Behältern 3 angeordnet, wobei eine individuelle Lücke 22 zwischen jeder Behälterreihe vorgesehen ist. Anfangs ist jede Lücke 22 zum benachbarten Gassenband 5 versetzt, wobei die Lücken 22 entlang der Transportrichtung synchronisiert werden, so dass eine gemeinsame Lücke 23 gebildet ist. So kann ein Gebinde mit drei Reihen zu drei Behältern 3, also mit neun Behältern 3 gebildet werden, wie die Figuren entnehmbar ist. Entlang des weiteren Tarnsportes kann noch ein Stütz- oder Schubstab 6 vorgesehen sein, wie den Figuren 1 und 2 entnehmbar ist.

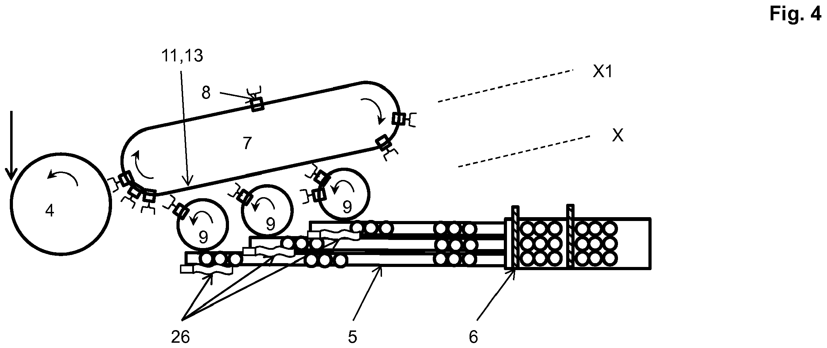

In Figur 4 ist eine Ergänzung zu vorgenannten Varianten gezeigt, bei welcher im Übergangsbereich zwischen den Ausleitsternen 9 und den Gassenbändern 5 Transportschnecken 26 vorgesehen sind, mit welchen einzelne Behälter oder eine Gruppe von in Reihe stehenden Behältern gezielt beschleunigt oder verlangsamt werden könne. Die Antriebe der Transportschnecken 26 sind hierfür stufenlos steuer- und regelbar.

Bedarfsweise kann es vorteilhaft sein, wenn bei den vorstehenden Aufführungsvarianten mindestens in einer Teilstrecke parallel zu den Gassenbändern, mindestens auf einer Teilstrecke der Verdichtereinheit und/oder einer Zuführungsstrecke hiervon, seitliche Geländerführungen vorgesehen werden.

### Bezugszeichenliste:

- 1: Vorrichtung
- 2: Gebinden
- 3: Behälter
- 4: Behälterbehandlungsanlage
- 5: Gassenbänder
- 6: Stütz- oder Schubstab
- 7: Lineartransporteur
- 8: Bewegungselemente
- 9: Ausleitstern
- 10: Verdichtereinheit
- 11: Bewegungsbahn
- 12: Hintrum
- 13: Rücktrum
- 14: Kurvenbereich
- 15: Haltevorrichtung
- 16: Inspektionsvorrichtung
- 17: Auswurfstation
- 18: Weichen/Teiler
- 19: Übergabevorrichtung
- 20: Übernahmeband
- 21: Querverdichtungselement
- 22: individuelle Lücke
- 23: gemeinsame Lücke
- 24: Folieneinschlag
- 25: Schrumpftunnel
- 26: Schneckenförderer

## Patentansprüche

1. Vorrichtung zum Herstellen von Gebinden (2) mit Behältern (3), umfassend einen elektromagnetischen Lineartransporteur (7), mehrere Ausleitsterne (9), mehrere Gassenbänder (5) und mindestens eine Verdichtereinheit (10), wobei ein von einer außerhalb der Vorrichtung zum Herstellen von Gebinden angeordneten Behälterbehandlungsanlage (4) kommender Behälterstrom, mittels Gassenteilung in mehrere einspurige Behälterströme umgewandelt wird, wobei die Behälter (3) auf die Gassenbänder (5) aufgesetzt werden, und die mindestens eine Verdichtereinheit (10) zum Verdichten einer vorbestimmten Anzahl an Behältern (3) vorgesehen ist, so dass verdichtete oder formierte Behältergruppen oder Teilgebinde gebildet und nachfolgend jeweils zu einem späteren Gebinde (2) zusammengefasst werden, wobei zur Übernahme der Behälter (3) von der Behälterbehandlungsanlage (4) der elektromagnetischer Lineartransporteur (7) vorgesehen ist, an welchem Bewegungselemente (8) umlaufend angeordnet sind, an welchen jeweils Haltevorrichtungen (15) zum Halten und/oder Ausrichten der Behälter (3) angeordnet sind, wobei dem elektromagnetischen Lineartransporteur (7) die mehreren Ausleitsterne (9) nachgeschaltet sind, an die die Behälter (3) übergeben werden und von hier auf die Gassenbänder (5) aufgesetzt werden, **dadurch gekennzeichnet, dass**
der Lineartransporteur (7) als elektromagnetischer Direktantrieb mit einer geschlossenen Bewegungsbahn (11) ausgeführt ist, die einen Hintrum (12) und einen Rücktrum (13) aufweist, zwischen denen Kurvenbereiche angeordnet sind,
und die Ausleitsterne (9) als elektromagnetischer Direktantrieb ausgeführt sind und dabei individuell ansteuerbare Bewegungselemente aufweisen.

2. Vorrichtung nach Anspruch 1, **dadurch gekennzeichnet, dass** drei Ausleitsterne (9) vorgesehen sind.

3. Vorrichtung nach einem der vorhergehenden Ansprüche, **dadurch gekennzeichnet, dass** eine Mittellängsachse (X1) des Lineartransporteurs (7) parallelen zu einer Mittelgeraden (X) ist, welche durch eine Rotationsachse des oder der Ausleitsterne (9) führt.

4. Vorrichtung nach einem der vorhergehenden Ansprüche, **dadurch gekennzeichnet, dass** jedes Gassenband (5) eine unterschiedliche Länge aufweist und in einem spitzen Winkel auf die Verdichtereinheit (10) zuläuft.

5. Vorrichtung nach einem der Ansprüche 1 bis 3, **dadurch gekennzeichnet, dass** jedes Gassenband (5) eine identische Länge aufweisen kann und in einem senkrechten Winkel auf die Verdichtereinheit (10) zuläuft.

6. Vorrichtung nach Anspruch 1 bis 3, **dadurch gekennzeichnet dass** jedes Gassenband (5) eine unterschiedliche Länge aufweist und in Aufsicht gesehen horizontal auf die Verdichtereinheit (10) zuläuft.

7. Vorrichtung nach einem der vorgenannten Ansprüche, **dadurch gekennzeichnet, dass** mindestens im Bereich zwischen einem Ausleitstern (9) und einem Gassenband (5) ein Transportmittel vorgesehen ist, mit welchem ein Behälter oder eine Gruppe von Behältern auf dem jeweiligen Gassenband (5) relativ zu und unabhängig von diesem Gassenband (5) beschleunigt werden kann, bspw. ein Schneckenförderer (26) oder eine Klemmband.

8. Vorrichtung nach einem der vorgenannten Ansprüche, weiterhin umfassend eine Behälterbehandlungsanlage (4), wobei der elektromagnetischer Lineartransporteur (5) der Behälterbehandlungsanlage (4) nachfolgend angeordnet ist.

9. Vorrichtung nach Anspruch 8, **dadurch gekennzeichnet, dass** die Behälterbehandlungsanlage (4) ein Rinser, Füller, Verschließer oder eine Etikettiermaschine ist.

10. Vorrichtung nach einem der vorgenannten Ansprüche, **dadurch gekennzeichnet, dass** zumindest eine Inspektionsvorrichtung (16) an dem Hintrum (12) angeordnet ist.

11. Vorrichtung nach einem der vorgenannten Ansprüche, **dadurch gekennzeichnet, dass** die mehreren Ausleitsterne (9) an dem Rücktrum (13) angeordnet sind.

12. Vorrichtung nach einem der vorgenannten Ansprüche, **dadurch gekennzeichnet, dass** die Gassenbänder (5) als elektromagnetische Lineartransporteure ausgeführt sind und dabei separat und individuell ansteuerbare Bewegungselemente aufweisen.

## Claims

1. Apparatus for forming multipacks (2) with containers (3), comprising an electromagnetic linear transporter (7), a plurality of star-shaped discharge conveyors (9), a plurality of passage belts (5), and at least one compactor unit (10), wherein a stream of containers, coming from a container-handling installation (4) arranged outside the apparatus for forming multipacks, is converted into a plurality of single-track streams of containers by means of being divided along separate passages, wherein the containers (3) are set down on the passage belts (5), and the at least one compactor unit (10) is provided for compacting a predetermined number of containers (3), such that compacted or shaped container groups or partial multipacks are formed and then combined in each case to form a subsequent multipack (2), wherein, for the takeover of the containers (3) from the container-handling installation (4), the electromagnetic linear transporter (7) is provided, on which movement elements (8) are arranged in a circulating manner, arranged on which in each case are holding devices (15) for holding and/or aligning the containers (3), wherein the plurality of star-shaped discharge conveyors (9) are arranged downstream of the electromagnetic linear transporter (7), onto which the containers (3) are transferred, and from here are set down onto the passage belts (5),
**characterised in that**
the linear transporter (7) is configured as an electromagnetic direct drive with a closed movement path (11), which comprises a feed strand (12) and a return strand (13), arranged between which are curved sections, and the star-shaped discharge conveyors (9) are configured as electromagnetic direct drives, and in this situation comprise individually controllable movement elements.

2. Apparatus according to claim 1, **characterised in that** three star-shaped discharge conveyors (9) are provided.

3. Apparatus according to any one of the preceding claims, **characterised in that** a middle longitudinal axis (X1) of the linear transporter (7) is parallel to a middle straight line (X), which leads through a rotation axis of the star-shaped discharge conveyor(s) (9).

4. Apparatus according to any one of the preceding claims, **characterised in that** each passage belt (5) exhibits a different length and runs at an acute angle to the compactor unit (10).

5. Apparatus according to any one of claims 1 to 3, **characterised in that** each passage belt (5) can exhibit an identical length and runs at a perpendicular angle onto the compactor unit (10).

6. Apparatus according to any one of claims 1 to 3, **characterised in that** each passage belt (5) exhibits a different length, and, seen from above, runs horizontally onto the compactor unit (10).

7. Apparatus according to any one of the preceding claims, **characterised in that**, at least in the region between a star-shaped discharge conveyor (9) and a passage belt (5), a transport means is provided, with which a container or a group of containers on the respective passage belt (5) can be accelerated relative to and independently of this passage belt (5), such as, for example, a worm conveyor (26) or a clamping band.

8. Apparatus according to any one of the preceding claims, further comprising a container-handling installation (4), wherein the electromagnetic linear transporter (5) is arranged downstream of the container-handling installation (4).

9. Apparatus according to claim 8, **characterised in that** the container-handling installation (4) is a rinser, filler, closing machine, or labelling machine.

10. Apparatus according to any one of the preceding claims, **characterised in that** at least one inspection device (16) is arranged on the feed strand (12).

11. Apparatus according to any one of the preceding claims, **characterised in that** the plurality of star-shaped discharge conveyors (9) are arranged on the return strand (13).

12. Apparatus according to any one of the preceding claims, **characterised in that** the passage belts (5) are configured as electromagnetic linear transporters, and in this situation comprise separate and individually controllable movement elements.

## Revendications

1. Dispositif servant à confectionner des packs (2) de récipients (3), comprenant un convoyeur linéaire (7) électromagnétique, plusieurs tourniquets d'évacuation (9), plusieurs convoyeurs de voies (5) et au moins un ensemble de compression (10), dans lequel un flux de récipients venant d'une installation de traitement de récipients (4) agencée en dehors du dispositif servant à confectionner des packs, est converti au moyen d'un répartiteur de voies en plusieurs flux de récipients à une seule voie, dans lequel les récipients (3) sont déposés sur les convoyeurs de voies (5), et l'au moins un ensemble de compression (10) est prévu pour la compression d'un nombre prédéfini de récipients (3) afin de former des groupes de récipients ou des parties de packs serrés ou mis en forme et ensuite réunis respectivement pour former un pack ultérieur (2), dans lequel pour la prise en charge des récipients (3) de l'installation de traitement de récipients (4) le convoyeur linéaire (7) électromagnétique est prévu, sur lequel des éléments mobiles (8) sont disposés à la manière d'un carrousel, sur lesquels respectivement des dispositifs de retenue (15) sont agencés pour la retenue et/ou l'orientation des récipients (3), dans lequel en aval du convoyeur linéaire (7) électromagnétique sont montés les plusieurs tourniquets d'évacuation (9), auxquels les récipients (3) sont transférés et à partir de là, déposés sur les convoyeurs de voies (5),
**caractérisé en ce que**
le convoyeur linéaire (7) est réalisé comme entraînement direct électromagnétique avec une bande de déplacement (11) fermée qui présente un brin aller (12) et un brin retour (13), entre lesquels des zones courbées sont agencées,
et les tourniquets d'évacuation (9) sont réalisés comme entraînement direct électromagnétique et présentent des éléments de déplacement commandables individuellement.

2. Dispositif selon la revendication 1, **caractérisé en ce que** trois tourniquets d'évacuation (9) sont prévus.

3. Dispositif selon l'une quelconque des revendications précédentes, **caractérisé en ce qu'**un axe médian longitudinal (X1) du convoyeur linéaire (7) est parallèle à une droite médiane (X) qui mène au travers d'un axe de rotation du ou des tourniquets d'évacuation (9).

4. Dispositif selon l'une quelconque des revendications précédentes, **caractérisé en ce que** chaque convoyeur de voies (5) présente une longueur différente et converge selon un angle aigu vers l'ensemble de compression (10).

5. Dispositif selon l'une quelconque des revendications 1 à 3, **caractérisé en ce que** chaque convoyeur de voies (5) peut présenter une longueur identique et converge selon un angle perpendiculaire vers l'ensemble de compression (10).

6. Dispositif selon la revendication 1 à 3, **caractérisé en ce que** chaque convoyeur de voies (5) présente une longueur différente et converge vu en élévation horizontalement vers l'ensemble de compression (10).

7. Dispositif selon l'une quelconque des revendications précédentes, **caractérisé en ce qu'**au moins dans la zone entre un tourniquet d'évacuation (9) et un convoyeur de voies (5) un moyen de transport est prévu, avec lequel un récipient ou un groupe de récipients peut être accéléré sur le convoyeur de voies (5) respectif par rapport à et indépendamment de ce convoyeur de voies (5), ou un convoyeur à vis (26) ou une bande de serrage.

8. Dispositif selon l'une quelconque des revendications précédentes, comprenant en outre une installation de traitement de récipients (4), dans lequel le convoyeur linéaire électromagnétique (5) est agencé suivant l'installation de traitement de récipients (4).

9. Dispositif selon la revendication 8, **caractérisé en ce que** l'installation de traitement de récipients (4) est une rinceuse, une remplisseuse, une capsuleuse ou une étiqueteuse.

10. Dispositif selon l'une quelconque des revendications précédentes, **caractérisé en ce qu'**au moins un dispositif d'inspection (16) est agencé sur le brin aller (12).

11. Dispositif selon l'une quelconque des revendications précédentes, **caractérisé en ce que** les plusieurs tourniquets d'évacuation (9) sont agencés sur le brin retour (13).

12. Dispositif selon l'une quelconque des revendications précédentes, **caractérisé en ce que** les convoyeurs de voies (5) sont réalisés comme convoyeurs linéaires électromagnétiques et présentent des éléments de déplacement commandables séparément et individuellement.
